# EUROPÄISCHE PATENTSCHRIFT

(11) **EP 2 629 877 B1**
(45) Veröffentlichungstag und Bekanntmachung des Hinweises auf die Patenterteilung: **15.07.2015**
(21) Anmeldenummer: 11802954.5
(22) Anmeldetag: 27.12.2011
(51) Int. Cl.: B01D 41/04, F01N 3/023, F01N 3/035, B01D 46/00

(54) **VERFAHREN ZUR REINIGUNG VON PARTIKELFILTERN**
PROCESS FOR CLEANING PARTICULATE FILTERS
PROCÉDÉ DE NETTOYAGE DE FILTRES À PARTICULES

(30) Priorität: 28.12.2010 DE 102010061598; 03.01.2011 DE 102011007941; 16.02.2011 DE 102011011342; 23.02.2011 DE 102011011997; 26.02.2011 DE 102011012567; 21.05.2011 DE 102011102218; 12.08.2011 WO PCT/EP2011/063988
(43) Veröffentlichungstag der Anmeldung: 28.08.2013
(73) Patentinhaber: KIPP, Jens-Werner, 33659 Bielefeld (DE)
(72) Erfinder: KIPP, Jens-Werner, 33659 Bielefeld (DE)
(74) Vertreter: Wickord, Wiro
(86) Internationale Anmeldenummer: PCT/EP2011/074089
(87) Internationale Veröffentlichungsnummer: WO 2012/089730

(56) Entgegenhaltungen:
- EP-A1- 0 132 166
- EP-A1- 2 166 203
- WO-A1-2008/131573
- DE-A1- 10 048 511
- DE-A1-102006 032 886
- FR-A1- 2 849 672

## Beschreibung

Die Erfindung betrifft ein Verfahren zur Reinigung von Partikelfiltern, die eine katalytisch aktive Oberfläche aufweisen, insbesondere von Abgaspartikelfiltern für Dieselmotoren.

Fahrzeuge und Arbeitsmaschinen, die durch Dieselmotoren angetrieben werden, müssen mit einem Abgaspartikelfilter ausgestattet werden. Der heutige Standard wird mit EURO 5 bezeichnet, die nächste Stufe wird mit EURO 6 bezeichnet und in Kürze eingeführt. Trotz vieler technischer Fortschritte besteht für diese Filter ein Reinigungsbedarf. Der Reinigungsbedarf wird umso höher, je mehr Kurzstrecken gefahren werden. Der Dieselmotor erreicht auf diesen Strecken dann nicht die Temperaturen, die eine Verbrennung der Abgaspartikel, zumeist Ruß, gewährleisten. Die Reinigung der Filter wird zumeist durchgeführt, indem die Filter nach dem Ausbau aus dem Fahrzeug in einem geeigneten Ofen bis auf ca. 600° erhitzt werden, um den Ruß zu verbrennen. Hierbei kommt es oft zu einem Verzug des Filtergehäuses, dass den Wiedereinbau erschwert. Die im Filter verbleibende Asche wird dann z.B. mit Druckluft ausgeblasen. Dazu muss zumindest bei Filtern von Kraftfahrzeugen zumeist das Filtergehäuse geöffnet werden, damit man eine Düse auf die Filterflächen richten kann. Das Verfahren ist aufwändig und zeitraubend, zumal oft mehrere Brenn- und Ausblasgänge erforderlich sind, um einen akzeptablen Reinigungserfolg zu erzielen.

Aus WO 2008/131 573 A1 ist ein Verfahren bekannt, mit dem der Filter bei laufendem Betrieb des Fahrzeugs kontinuierlich regeneriert werden kann. Da die Abgastemperatur im Normalbetrieb des Motors nicht für eine thermische Regeneration des Filters ausreicht, wird stromaufwärts des Filters ein zusätzlicher Brennstoff eingedüst, der an der katalytisch aktiven Oberfläche katalytisch oxidiert wird. Durch die bei dieser Reaktion entstehende Wärme wird die Abtastemperatur im Filter so weit erhöht, dass der Ruß verbrannt werden kann.

Eine Alternative zur thermischen Regeneration des Filters ist die Regeneration mittels NO₂. Für die Durchführung dieses Verfahrens muss für die katalytisch aktive Schicht des Filters ein Katalysatormaterial gewählt werden, mit dem eine hohe Produktionsrate an NO₂ erreicht wird.

Aus DE 103 21 2990 A1 ist ein Verfahren bekannt, bei dem der Filter mit einer Reinigungsflüssigkeit gespült und danach durch Erhitzen getrocknet wird.

EP2166203 offenbart das Beimischen einer wässrigen Harnstofflösung in das heiße Abgas. Der Harnstoff dient als Ammoniakvorläufer, welch letzterer durch selektive katalytische Reduktion zur Zersetzung von Stickoxiden in Stickstoff und Wasserdampf beiträgt.

Aufgabe der Erfindung ist es ein einfaches und wirtschaftliches Verfahren zur Reinigung von Abgasfiltern zu schaffen.

Diese Aufgabe wird gelöst durch ein Verfahren mit den folgenden Schritten:
- Einwirkenlassen einer an der katalytisch aktiven Oberfläche adsorbierbaren Reinigungssubstanz, die eine Verdampfungs- oder Zersetzungstemperatur von mehr als 100° C und weniger als 300° C die nicht brennbar ist hat und als Hauptkomponente eine Stickstoffverbindung enthält die eine NH₃-Vorläufersubstanz ist, auf die katalytisch aktive Oberfläche, und
- Erhitzen der Reinigungssubstanz auf der katalytisch aktiven Oberfläche auf eine Temperatur oberhalb ihrer Verdampfungs- oder Zersetzungstemperatur.

Bei dem erfindungsgemäßen Verfahren wird die Reinigungssubstanz auf die katalytisch aktiven Oberflächen des Filters aufgebracht, ohne dass der Filter mit dieser Substanz gespült wird. Dadurch werden die Verfahrensdauer und der Materialverbrauch deutlich reduziert. Die Wirkung des Verfahrens beruht darauf, dass die Reinigungssubstanz mit der katalytisch aktiven Oberfläche in Wechselwirkung tritt, wobei das katalytisch aktive Material ggf. eine Zersetzung der Reinigungssubstanz und/oder eine Reaktion dieser Substanz mit den auf der katalytisch aktiven Oberfläche haftenden Verunreinigungen katalysieren kann. In jedem Fall wird durch die Adsorption der Reinigungssubstanz an der katalytisch aktiven Oberfläche die Haftung der Verunreinigungen an dieser Oberfläche gelockert. Durch die Erhitzung wird die Reinigungssubstanz dann zusammen mit den Verunreinigungen oder deren Zersetzungsprodukten von der katalytisch aktiven Oberfläche entfernt. Da zu diesem Zweck die Reinigungssubstanz nur auf maximal 300°C erhitzt zu werden braucht, wird auch eine deutliche Energieersparnis erreicht und eine Schädigung des Filters vermieden.

Vorteilhafte Ausgestaltungen sind in den Unteransprüchen angegeben.

Bei der Reinigungssubstanz kann es sich um eine nichtelektrolytische wässrige Lösung handeln, die in flüssiger Form auf die katalytisch aktive Oberfläche aufgebracht wird. In diesem Zusammenhang wird eine Stickstoffverbindung als "nichtelektrolytisch" bezeichent werden, wenn ihre Dissoziationskonstante kleiner als etwa 2 · 10⁻⁵ ist, was etwa der Dissoziationskonstantenvon Essisgsäure entspricht. Es kann sich bei der Reinigungssubstanz jedoch auch um eine feste Substanz handeln, die als feinkörniges Granulat oder durch Bedampfen auf die Katalysatoroberfläche aufgebracht wird. Die Zersetzungs- oder Verdampfungstemperatur, zumindest für die Hauptkomponente der Reinigungssubstanz, liegt vorzugsweise unter 180°C, besonders bevorzugt unter 140°C.

Als Reinigungssubstanz wird eine NH₃-Vorläufersubstanz verwendet. Die Reinigungssubstanz sollte nicht toxisch und nicht brennbar sein. Geeignet ist z.B. Kohlensäurediamid. Zum Ansetzen der wässrigen Lösung sollte entmineralisiertes Wasser verwendet werden.

Zum Imprägnieren des Filters mit der Reinigungssubstanz kann ein Strahlverfahren mittels eines Trägergases, z.B. Druckluft, eingesetzt werden, dem die flüssige Lösung oder das Granulat zugesetzt wird. Wahlweise kann auch ein Sprühverfahren ohne die Unterstützung durch ein Trägergas eingesetzt werden, oder die Flüssigkeit wird durch den Filter gepumpt oder einfach drucklos in den Filter eingegossen oder der Filter wird in die Flüssigkeit getaucht.

In einer Ausführungsform wird der Filter aus dem Fahrzeug ausgebaut, mit der Reinigungssubstanz imprägniert und anschließend in einem Ofen erhitzt. Der größte Teil der Verunreinigungen geht dabei in die Gasphase über und entweicht zusammen mit dem dampf bzw. den Zersetzungsprodukten der Reinigungssubstanz. Die eventuell noch verbleibenden Verunreinigungen liegen dann nur noch lose im Filter und können problemlos entfernt werden, beispielsweise durch einfaches "Stürzen" des Filters, durch Vibration, Klopfen, Aussaugen oder Ausblasen mittels Druckluft.

Bei einer anderen Variante des Verfahrens kann der Filter im Fahrzeug eingebaut bleiben. Die Reinigungssubstanz wird dann zu einem Zeitpunkt in den Filter eingebracht, vorzugsweise in der Form einer wässrigen Lösung, zu dem der Filter nach längerem Betrieb des Fahrzeugmotors noch eine relativ hohe Temperatur hat. Während ein Teil des Wassers verdampft, kühlt sich die katalytisch aktive Oberfläche des Filters ab, so dass sich die aktive Komponente der Reinigungssubstanz darauf niederschlagen kann. Nach Beendigung der Flüssigkeitszufuhr bewirkt dann die im Katalysator gespeicherte Restwärme, dass sich die aktiven Oberflächen wieder erwärmen und die Verdampfung oder Zersetzung der Reinigungssubstanz bewirkt wird.

Im folgenden wird ein Ausführungsbeispiel anhand der Zeichnung näher erläutert.

Es zeigen:
- Fig. 1: einen schematischen Schnitt durch einen Filter während eines ersten Schrittes des erfindungsgemäßen Verfahrens;
- Fig. 2: einen Trocknungsschritt für den Filter;
- Fig. 3: einen Schritt zur mechanischen Trockenreinigung des Filters; und
- Fig. 4: eine Prinzipskizze zu einer abgewandelten Ausführungsform des Verfahrens.

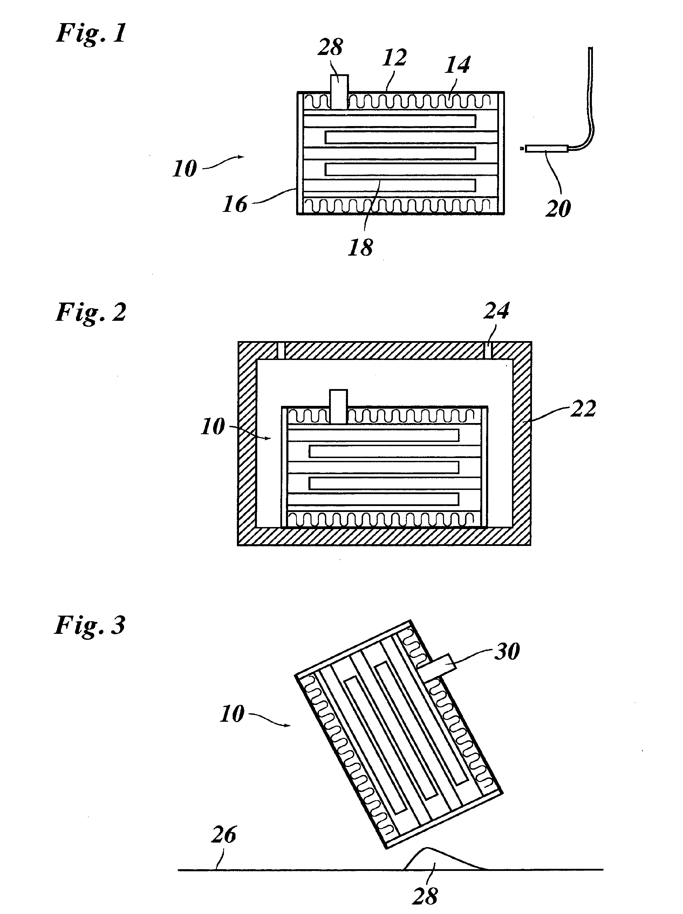

Der in Fig. 1 gezeigte Filter 10, beispielsweise ein Abgasfilter eines Pkw mit Dieselmotor, weist ein an beiden Enden offenes Gehäuse 12 aus Metall auf, dessen Wände innen mit hitzebeständigen Matten 14 ausgekleidet sind und das einen Filterkörper 16 aus porösem Keramikmaterial aufnimmt, dessen filterwirksame Oberflächen 18 eine katalytisch aktive Beschichtung aufweisen. Nach längerem Gebrauch des Filters sind die Oberflächen 18 mit nicht gezeigten Rußpartikeln behaftet.

Zur Reinigung wird der Filter 10 aus der Abgasanlage des Fahrzeugs ausgebaut, und mit einer Strahldüse 20 wird ein Gemisch aus Flüssigkeit und Druckluft zumindest von einem Ende her, beispielsweise vom einlassseitigen Ende her, oder vorzugsweise von beiden Enden her in den Filterkörper 16 eingestrahlt. Bei der Flüssigkeit handelt es sich beispielsweise um entmineralisiertes Wasser, in dem eine Reinigungssubstanz gelöst ist.

Da die Flüssigkeit mit Hilfe der Strahldüse 20 direkt in den Filterkörper 16 eingestrahlt wird, läßt sich eine übermäßige Durchfeuchtung der Matten 14 vermeiden.

Nachdem die Flüssigkeit eine gewisse Zeit auf die Rußschichten an den Wänden und in den Poren des Filterkörpers 16 eingewirkt hat, wird der Filter 10 in einen Ofen 22 (Fig. 2) eingebracht und schonend bei einer Temperatur von beispielsweise 140 bis 180° getrocknet. Die Trocknungstemperatur sollte oberhalb des Siedepunktes der zuvor eingestrahlten Flüssigkeit (und der darin gelösten Substanzen) liegen. Die Flüssigkeit wird somit verdampft und entweicht über Öffnungen 24 aus dem Ofen. Der Trocknungsvorgang wird so lange fortgesetzt, bis sämtliche Flüssigkeit verdampft ist.

Durch diese Behandlung wird der Belag an den katalytisch aktiven Oberflächen an den Wänden des Filterkörpers 16 chemisch/katalytisch zersetzt. Eventuell verbleibende Rückstände zerfallen in kleine Partikel, die sich leicht von den Wänden des Filtermaterials lösen.

Wie in Fig. 3 gezeigt ist, genügt es dann, den Filter 10 zu stürzen oder auf einer Unterlage 26 auszuklopfen, um die trockenen Verunreinigungen 28 aus dem Filter zu entfernen.

In dem hier gezeigten Beispiel weist der Filter 10 einen Temperatursensor 30 auf, der während des Betriebs des Kraftfahrzeugs dazu dient, die Temperatur des Filters zu überwachen. Der Filter ist lösbar in der Wand des Gehäuses 12 angeordnet. Da die Flüssigkeit mit Hilfe der Strahldüse 20 vom zumindest einem offenen Ende her in den Filterkörper eingestrahlt wird, braucht der Temperatursensor 30 bei dem Reinigungsverfahren nicht ausgebaut zu werden.

Anstelle einer Flüssigkeit kann wahlweise auch eine feste Reinigungssubstanz als Granulat in den Filter eingestrahlt werden.

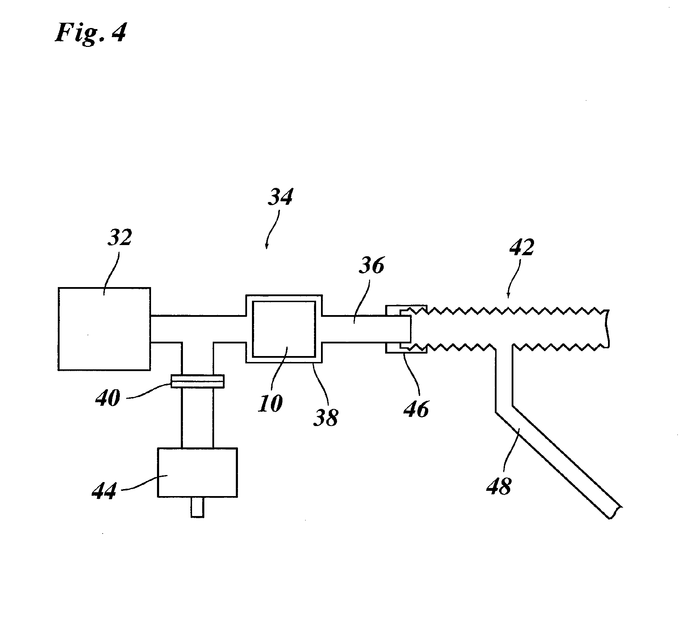

Fig. 4 illustriert eine Verfahrensvariante, bei der der Filter 10 nicht aus der Auspuffanlage des Fahrzeugs ausgebaut zu werden braucht.

In Fig. 4 sind schematisch ein Motor 32 sowie eine Auspuffanlage 34 des Fahrzeugs dargestellt. Die Auspuffanlage 34 umfasst ein Auspuffrohr 36 und einen Auspufftopf 38, in dem der Filter 10 so angeordnet ist, dass er von den Auspuffgasen des Motors 32 durchströmt wird. An einem Abschnitt des Auspuffrohres 36 zwischen dem Motor 32 und dem Auspufftopf 38 ist eine Anschlussstelle 40 vorgesehen, die wahlweise den Anschluss eines Strahlaggregats 42 oder eines Absaugaggregats 44 erlaubt. Im gezeigten Beispiel ist das Strahlaggregat 42 mit einer Schelle 46 an das offene Ende des Auspuffrohres 36 angeschlossen, während das Absaugaggregat 44 mit der Anschlussstelle 40 verbunden ist.

Die Reinigung des Filters 10 wird durchgeführt, nachdem das Keramikmaterial dieses Filters durch längeren Betrieb des Motors 32 auf seine Betriebstemperatur erhitzt wurde. Über das Strahlaggregat 42 wird ein Trägergas, beispielsweise Druckluft, in das Auspuffrohr 36 eingeleitet. Das Strahlaggregat 42 weist außerdem eine Zuleitung 48 auf, über welche die Reinigungssubstanz in flüssiger Form, als Lösung, in die Druckluftströmung eindosiert wird. Die fein zerstäubte Reinigungssubstanz lagert sich auf den katalytisch aktiven Oberflächen des Filters ab. Damit die Reinigungssubstanz gleichmäßig und vollständig in den Filter eindringt, werden die Dauer des Strahlvorgangs und das Volumen des Trägergases so bemessen, dass der gesamte Filter 10 zumindest kurzzeitig einem Druck von mindestens 1 kPa (0,01 bar) ausgesetzt wird. Anschließend wird die Zufuhr von Druckluft und Reinigungssubstanz beendet, und das Strahlaggregat 42 wird vom Ende des Auspuffrohres 36 gelöst. Die Restwärme des Partikelfilters 10 ist so groß, dass die katalytisch aktiven Oberflächen, die zuvor durch die Druckluft, die Reinigungssubstanz und - bei Verwendung einer wässrigen Lösung - durch das Wasser auf unter 100° C abgekühlt wurden, sich wieder auf eine Temperatur erhitzen, die oberhalb der Verdampfungs- oder Zersetzungstemperatur der Reinigungssubstanz liegt. Auf diese Weise werden die Verunreinigungen von den Oberflächen 18 des Filters gelöst, so dass sie mit dem Absaugaggregat 44 abgesaugt werden können.

In einer modifizierten Ausführungsform wird das Strahlaggregat 42 an die Anschlussstelle 40 angeschlossen und das Absaugaggregat 44 an das Ende des Auspuffrohres, so dass die Reinigungssubstanz vom entgegengesetzten Ende her in den Filter 10 eintritt. Es ist auch möglich, die Prozedur in mehreren Schritten durchzuführen, bei denen die Reinigungssubstanz abwechselnd von entgegengesetzten Seiten her in den Filter eintritt.

Sofern die Verunreinigungen auf den katalytisch aktiven Oberflächen des Filters 10 vollständig chemisch zersetzt und verdampft werden, kann auf eine Absaugung auch ganz verzichtet werden.

Um eine zu starke Auskühlung des Filters zu verhindern, können die Reinigungssubstanz und/oder die Druckluft vorerhitzt werden.

Die in Fig. 4 gezeigte Ausführungsform, bei der der Filter 10 nicht ausgebaut zu werden braucht, ist insbesondere bei leistungsstarken Dieselmotoren, beispielsweise für Schiffsantriebe von Vorteil.

## Patentansprüche

1. Verfahren zur Reinigung von Partikelfiltern (10), die eine katalytisch aktive Oberfläche (18) aufweisen, **gekennzeichnet durch** die folgenden Schritte:
- Einwirkenlassen einer an der katalytisch aktiven Oberfläche (18) adsorbierbaren
Reinigungssubstanz, die eine Verdampfungs- oder Zersetzungstemperatur von mehr als 100° C und weniger als 300° C hat, die nicht brennbar ist und als Hauptkomponente eine Stickstoffverbindung enthält, die eine NH₃-Vorläufersubstanz ist,
auf die katalytisch aktive Oberfläche, und
- Erhitzen der Reinigungssubstanz auf der katalytisch aktiven Oberfläche (18) auf eine Temperatur oberhalb ihrer Verdampfungs- oder Zersetzungstemperatur.

2. Verfahren nach Anspruch 1, bei dem die Reinigungssubstanz eine Verdampfungs- oder Zersetzungstemperatur von weniger als 180° hat.

3. Verfahren nach Anspruch 2, bei dem die Reinigungssubstanz eine Verdampfungs- oder Zersetzungstemperatur von weniger als 140° hat.

4. Verfahren nach einem der vorstehenden Ansprüche, bei dem die Reinigungssubstanz in flüssiger Form in den Filter (10) eingebracht wird.

5. Verfahren nach Anspruch 4, bei dem die Reinigungssubstanz in Wasser gelöst ist.

6. Verfahren nach einem der vorstehenden Ansprüche, bei dem die Reinigungssubstanz mittels eines Strahlaggregats (18; 42) in den Filter (10) eingestrahlt wird.

7. Verfahren nach Anspruch 1, bei dem der Filter (10) in einem Ofen (22) erhitzt wird.

8. Verfahren nach einem der Ansprüche 1 bis 6, bei dem die Reinigungssubstanz in Form einer wässrigen Lösung in den Filter (10) eingebracht wird, während der Filter eine Temperatur oberhalb der Verdampfungs- oder Zersetzungstemperatur der Reinigungssubstanz hat, wobei die Temperatur der katalytisch aktiven Oberfläche (18) durch das Einbringen der Reinigungssubstanz vorübergehend unter die Verdampfungs- oder Zersetzungstemperatur gesenkt wird.

9. Verfahren nach einem der vorstehenden Ansprüche, bei dem nach dem Erhitzen der Reinigungssubstanz eine mechanische Trockenreinigung des Filters (10) erfolgt.

## Claims

1. Process for cleaning particulate filters (10) having a catalytically active surface (18), **characterised by** the following steps:
- allowing a cleaning substance, which is adsorbable on the catalytically active surface (18), has a vaporisation or decomposition temperature of more than 100 ºC and less than 300 ºC, is not combustible and contains as the main component a nitrogen compound which is an NH₃ precursor substance, to act on the catalytically active surface and
- heating the cleaning substance on the catalytically active surface (18) to a temperature above its vaporisation or decomposition temperature.

2. Process according to claim 1, in which the cleaning substance has a vaporisation or decomposition temperature of less than 180 °.

3. Process according to claim 2, in which the cleaning substance has a vaporisation or decomposition temperature of less than 140 °.

4. Process according to one of the preceding claims, in which the cleaning substance is introduced into the filter (10) in liquid form.

5. Process according to claim 4, in which the cleaning substance is dissolved in water.

6. Process according to one of the preceding claims, in which the cleaning substance is streamed into the filter (10) by means of a jet unit (18; 42).

7. Process according to claim 1, in which the filter (10) is heated in an oven (22).

8. Process according to one of claims 1 to 6, in which the cleaning substance is introduced into the filter (10) in the form of an aqueous solution, while the filter has a temperature above the vaporisation or decmposition temperature of the cleaning substance, the temperature of the catalytically active surface (18) being lowered temporarily below the vaporisation or decomposition temperature by the introduction of the cleaning substace.

9. Process according to one of the preceding claims, in which a mechanical dry cleaning of the filter (10) is carried out after the heating of the cleaning substance.

## Revendications

1. Procédé de nettoyage de filtres à particules (10), qui présentent une surface catalytiquement active (18), **caractérisé par** les étapes suivantes :
- laisser agir une substance de nettoyage, pouvant être adsorbée sur la surface catalytiquement active (18), qui possède une température de vaporisation ou de décomposition supérieure à 100 °C et inférieure à 300 °C, qui n'est pas inflammable et qui contient en tant que composant principal un composé d'azote, qui est un précurseur de NH₃, sur la surface catalytiquement active, et
- chauffer la substance de nettoyage sur la surface catalytiquement active (18) à une température au dessus de la température de vaporisation ou de décomposition.

2. Procédé selon la revendication 1, dans lequel la substance de nettoyage possède une température de vaporisation ou de décomposition inférieure à 180 °.

3. Procédé selon la revendication 2, dans lequel la substance de nettoyage possède une température de vaporisation ou de décomposition inférieure à 140 °.

4. Procédé selon l'une des revendications précédents, dans lequel la substance de nettoyage est apportée dans le filtre (10) sous forme liquide.

5. Procédé selon la revendication 4, dans lequel la substance de nettoyage est diluée dans de l'eau.

6. Procédé selon l'une des revendications précédentes, dans lequel la substance de nettoyage est projetée dans le filtre (10) au moyen d'un groupe de projection (18 ; 42).

7. Procédé selon la revendication 1, dans lequel le filtre (10) est chauffé dans un four (22).

8. Procédé selon l'une des revendications 1 à 6, dans lequel la substance de nettoyage est apportée dans le filtre (10) sous la forme d'une solution aqueuse, pendant que le filtre possède une température au dessus de la température de vaporisation ou de décomposition de la substance de nettoyage, la température de la surface catalytiquement active (18) étant rabaissée temporairement en dessous de la température de vaporisation ou de décomposition de la substance de nettoyage par l'apport de la substance de nettoyage

9. Procédé selon l'une des revendications précédentes, dans lequel il y a un nettoyage à sec mécanique du filtre (10) après le chauffage de la substance de nettoyage.
